# EUROPEAN PATENT APPLICATION

(11) **EP 1 793 327 A1**
(43) Date of publication of application: **06.06.2007**
(21) Application number: 06110536.7
(22) Date of filing: 28.02.2006
(51) Int. Cl.: G06K 7/10

(54) **Method and apparatus for optically reading identification information from commodity**

(30) Priority: 30.11.2005 JP 2005345880
(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: Ohkawa, Masanori, Inagi-shi Tokyo 206-8555 (JP); Ishii, Mitsuharu, Inagi-shi Tokyo 206-8555 (JP); Watanabe, Mitsuo, Inagi-shi Tokyo 206-8555 (JP); Yokota, Masakazu, Inagi-shi Tokyo 206-8555 (JP); Shimada, Shunji, Inagi-shi Tokyo 206-8555 (JP)
(74) Representative: Kreutzer, Ulrich

(57) **Abstract**

A scan beam formed by the optical scanning unit is divided by the first scan beam dividing unit and the second scan beam dividing unit. The first scan beam dividing unit and the second scan beam dividing unit are disposed in such a manner that the scan beams divided by the first scan beam dividing unit traverse a rotation axis of the optical scanning unit before reaching the second scan beam dividing unit.

## Description

### BACKGROUND OF THE INVENTION

### 1. Field of the Invention

The present invention relates to a technology for optically scanning a surface of a commodity to read identification information attached to the surface of the commodity.

### 2. Description of the Related Art

It has become common to use barcode scanner apparatuses at the checkout counters in supermarkets and the like. A barcode scanner apparatus optically reads a barcode attached to commodities. Conventional barcode scanner apparatuses generally have up to two reading window glasses to irradiate laser-beam on a surface of a commodity.

A barcode scanner apparatus having one reading window glass has advantages and disadvantages. The advantage is that it is small. The disadvantages are that it can provides only a small number of laser scan patterns and can read only from a small number of planes, such as two to four planes. Accordingly, if the target commodity is moving, depending on a position of the barcode attached to the commodity, the barcode scanner apparatus sometimes cannot read the barcode. One approach to take care of this issue is to tilt the commodity. However, not all commodities can be tilted. One cannot tilt, for example, a birthday cake.

Some conventional barcode scanner apparatuses have two reading window glasses to increase the number of readable planes. The reading window glasses are arranged in different directions. In a barcode scanner apparatus having two reading window glasses, it is possible to increase the number of directions of the scan beams and to read barcodes from a larger number of planes. Conventional barcode scanner apparatuses have been disclosed, for example, in Japanese Unexamined Patent Application Publication Nos. H9-167198 and H11-109272. Some of the barcode scanner apparatuses each including two pieces of reading window glass are installed vertically over a checkout counter, and some of them are used as being embedded in a checkout counter.

The barcode scanner apparatuses with two reading window glasses have some disadvantages. If the barcode scanner apparatus is installed upright over a checkout counter, the height of the device increases considerably. Especially, if an electronic multi-item keyboard is located above the scanner apparatus, a problem arises that the face-to-face interactions between a store clerk and a customer may be blocked.

If the barcode scanner apparatus is embedded in the checkout counter, not only the size of the apparatus increases, but also the store clerk cannot slide a shopping basket over the counter after the reading operation is completed and he/she needs to lift the shopping basket to move it over the scanner. This increases the load on the store clerk.

### SUMMARY OF THE INVENTION

It is an object of the present invention to at least solve the problems in the conventional technology.

According to an aspect of the present invention, a reading apparatus that reads identification information attached on an object located outside of the reading apparatus by optically scanning a surface of the object includes a light source configured to output a light beam; a rotating optical scanning unit configured to receive the light beam and deflect the light beam to obtain a deflected light beam; a first scan beam dividing unit configured to receive the deflected light beam and form a first deflected scan beam from the deflected light beam; a second scan beam dividing unit configured to receive the first deflected light beam and form a second deflected scan beam from the first deflected light beam; an opening for letting out the second deflected scan beam so that the second deflected scan beam scans the object; and a light collecting unit configured to collect light reflected from the object through the opening, wherein the first scan beam dividing unit and the second scan beam dividing unit are disposed in such a manner that a part of the first deflected light beam traverses a rotation axis of the optical scanning unit before reaching the second scan beam dividing unit.

According to another aspect of the present invention, a method of reading, with a reading apparatus, identification information attached on an object located outside of the reading apparatus by optically scanning a surface of the object including first receiving including receiving a light beam output from a light source and deflecting the light beam with a rotating optical scanning unit to obtain a deflected light beam; second receiving including receiving the deflected light beam and forming a first deflected scan beam from the deflected light beam; third receiving including receiving the first deflected light beam and form a second deflected scan beam from the first deflected light beam; outputting the second deflected scan beam out of the reading apparatus so that the second deflected scan beam scans the object; and collecting light reflected from the object through the opening to read identification information attached on an object, wherein a part of the first deflected light beam traverses a rotation axis of the optical scanning unit before reaching the second scan beam dividing unit.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a perspective of a scanner system according to an embodiment of the present invention;
Fig. 2 is a schematic of a scanner in the scanner system shown in Fig. 1;
Fig. 3 is a detailed schematic of the scanner shown in Fig. 2;
Fig. 4 is a schematic for explaining scan beams formed by the scanner shown in Fig. 3;
Fig. 5 is a schematic for explaining scan patterns generated by the scanner shown in Fig. 3;
Fig. 6 is a schematic for explaining scan beams formed by YL mirror reflection; and
Fig. 7 is a schematic for explaining scan beams formed by YR mirror reflection.

### DETAILED DESCRIPTION OF THE PREFERRED EMBODIMENTS

Exemplary embodiments of the present invention are explained in detail below, with reference to the accompanying drawings.

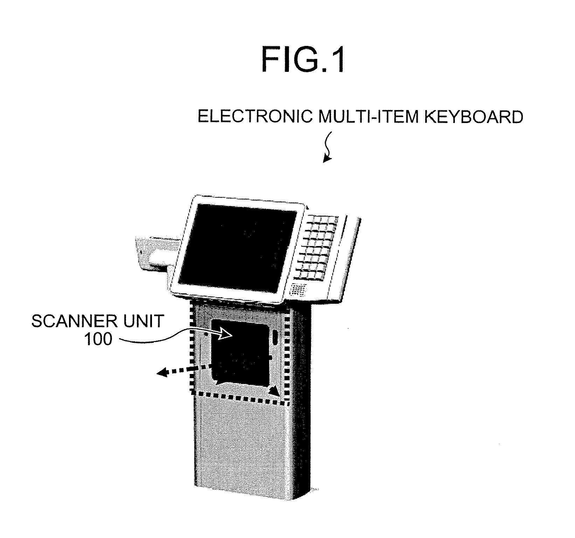

Fig. 1 is a perspective of a scanner system according to an embodiment of the present invention. The scanner system is installed vertically (upright) over a checkout counter (not shown). The scanner system includes a scanner unit 100 with one reading window glass that faces forward. An electronic multi-item keyboard is arranged above the scanner unit.

The scanner unit 100 irradiates scan beams in multiple directions and reads a barcode no matter onto which one of five lateral faces of a commodity the barcode is attached. In addition, because the electronic multi-item keyboard is provided above the scanner unit 100, it is possible to reduce the height of the scanner system.

As explained, with the scanner system according to the present embodiment, the arrangement is made so that the scanner unit 100 having one reading window glass is able to read a barcode attached onto any one of five lateral faces of a commodity. It is therefore possible to construct a scanner system that is small and low cost, and has a high level of reading performance.

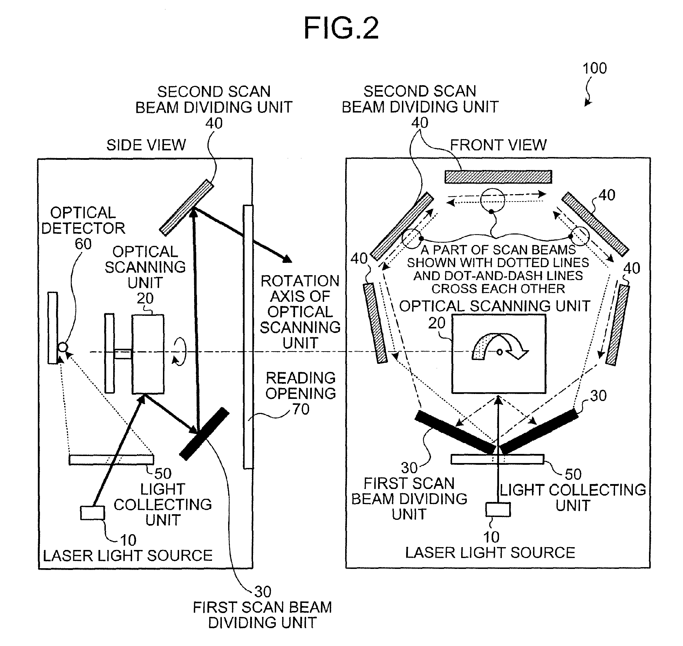

Next, the overall structure of the scanner unit 100 according to the present embodiment is explained below. Fig. 2 depicts a side view and a front view of the scanner unit 100. The scanner unit 100 includes a laser light source 10, an optical scanning unit 20, a first scan beam dividing unit 30, a second scan beam dividing unit 40, a light collecting unit 50, an optical detector 60, and a reading opening 70.

The laser light source 10 is a light source that emits laser beams and emits each laser beam toward the optical scanning unit 20. The optical scanning unit 20 is a polygon mirror that forms, by rotating, scan beams from the laser beam emitted by the laser light source 10. More specifically, the optical scanning unit 20 forms the scan beams by rotating a rectangular solid of which the four planes are mirrors. With this arrangement of having four mirrors on the four planes, it is possible to make the relationship appropriate between the angles at which the scan beams are reflected and the number of scan beams.

The first scan beam dividing unit 30 is a mirror that divides a scan beam into two directions. The first scan beam dividing unit 30 divides the scan beam into two directions by reflecting the scan beam with two mirrors whose reflection faces are disposed at mutually different angles. Further, the first scan beam dividing unit 30 reflects the scan beams toward the second scan beam dividing unit 40.

The first scan beam dividing unit 30 is disposed so as to be in the opposite direction of the second scan beam dividing unit 40 with respect to the optical scanning unit 20. Accordingly, a part of the scan beams reflected by the first scan beam dividing unit 30 traverse the rotation axis of the optical scanning unit 20 before reaching the second scan beam dividing unit 40.

With these arrangement wherein the first scan beam dividing unit 30 is disposed so as to be in the opposite direction of the second scan beam dividing unit 40 with respect to the optical scanning unit 20 and wherein the first scan beam dividing unit 30 includes the two mirrors whose reflection faces are disposed at mutually different angles, it is possible to broaden the angles at which the optical scanning unit 20 reflects the scan beams. To be more specific, when the optical scanning unit 20 includes four mirrors arranged in the shape of a rectangular solid, the angles at which the optical scanning unit 20 reflects the scan beams are 180 degrees at maximum; however, with this arrangement wherein each scan beam is at first reflected by the first scan beam dividing unit 30, it is possible to make the angle at which each scan beams is reflected larger than 180 degrees.

The second scan beam dividing unit 40 is a mirror that divides a scan beam into five directions. The second scan beam dividing unit 40 divides each scan beam into five directions by reflecting each of the scan beams from the first scan beam dividing unit 30 with five mirrors whose reflection faces are disposed at mutually different angles and irradiates a commodity with the scan beams through the reading window glass.

As shown in the front view in Fig. 2, the scan beam reflected by the mirror on the right side in the first scan beam dividing unit 30 is reflected by the four mirrors on the left, the top left, the top, and the top right in the second scan beam dividing unit 40, as shown with the dotted lines. The scan beam reflected by the mirror on the left side in the first scan beam dividing unit 30 is reflected by the four mirrors on the top left, the top, the top right, and the right in the second scan beam dividing unit 40, as shown with the dot-and-dash lines. In other words, by using the mirrors on the left and the right in the first scan beam dividing unit 30, it is possible to irradiate all of the five mirrors in the second scan beam dividing unit 40 with the scan beams.

The light collecting unit 50 is a concave mirror that collects reflection beams reflected by the commodity. The light collecting unit 50 irradiates the collected reflection beams toward the optical detector 60. The optical detector 60 is a detector that detects the reflection beams reflected by the commodity. A barcode is recognized based on the beams detected by the optical detector 60. The reading opening 70 is a window through which the scan beams reflected by the second scan beam dividing unit 40 are irradiated onto a commodity positioned on the outside of the scanner unit 100.

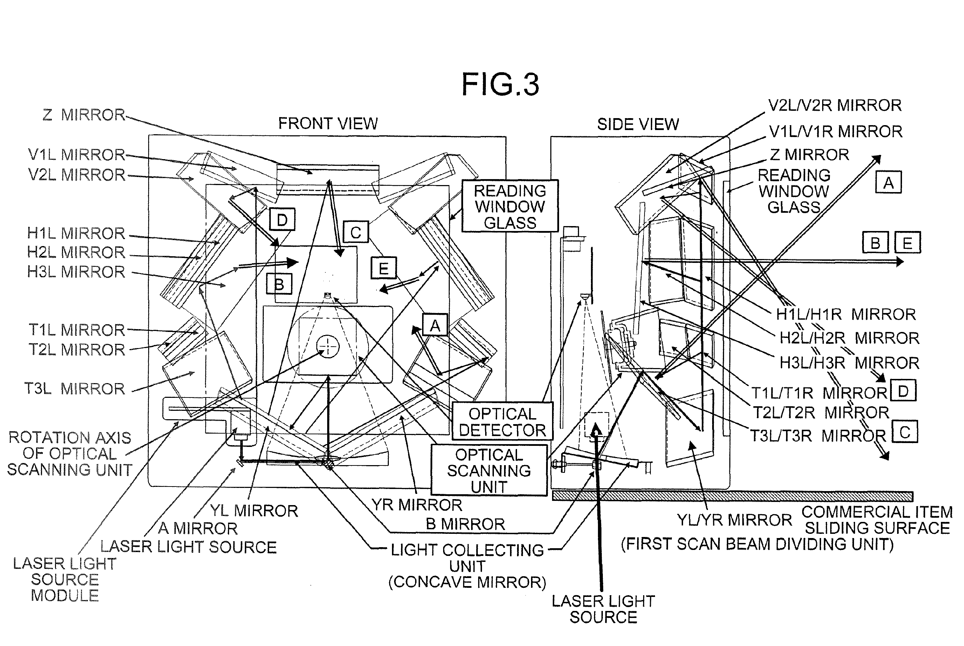

Next, the optical configuration of the scanner unit 100 will be explained below. Fig. 3 is a drawing of the configuration of the scanner unit 100. A YL mirror and a YR mirror correspond to the first scan beam dividing unit 30 shown in Fig. 2.

Further, the T3L/T3R mirrors, the T2L/T2R mirrors, the T1L/T1R mirrors, the H3L/H3R mirrors, the H2L/H2R mirrors, the H1L/H1R mirrors, the Z mirror, the V1L/V1R mirrors, and the V2L/V2R mirrors correspond to the second scan beam dividing unit 40 shown in Fig. 2. Each of the sets of the mirrors, namely the sets being made of the T*L mirror and the T*R mirror where * is any one of the numerals 1 to 3, the H*L mirror and the H*R mirror where * is any one of the numerals 1 to 3, and the V*L mirror and the V*R mirror where * is any one of the numerals 1 and 2, is disposed symmetrically with respect to the optical scanning unit 20.

To be more specific, although the schematic explanation has described that the second scan beam dividing unit 40 includes the five mirrors with reference to Fig. 2, the second scan beam dividing unit 40 includes these seventeen mirrors in actuality.

It should be noted, however, that these seventeen mirrors do not divide a scan beam individually. For example, a scan beam reflected by the YL mirror is reflected by one of the H1L mirror and the H2L mirror, depending on the rotation angle of the optical scanning unit 20, and then reflected by the H3L mirror. As seen in this example, a scan beam may be formed by a combination of two mirrors. In Fig. 3, the scan beams A to E are illustrated as representative scan beams; however, the scanner unit 100 may form more scan beams.

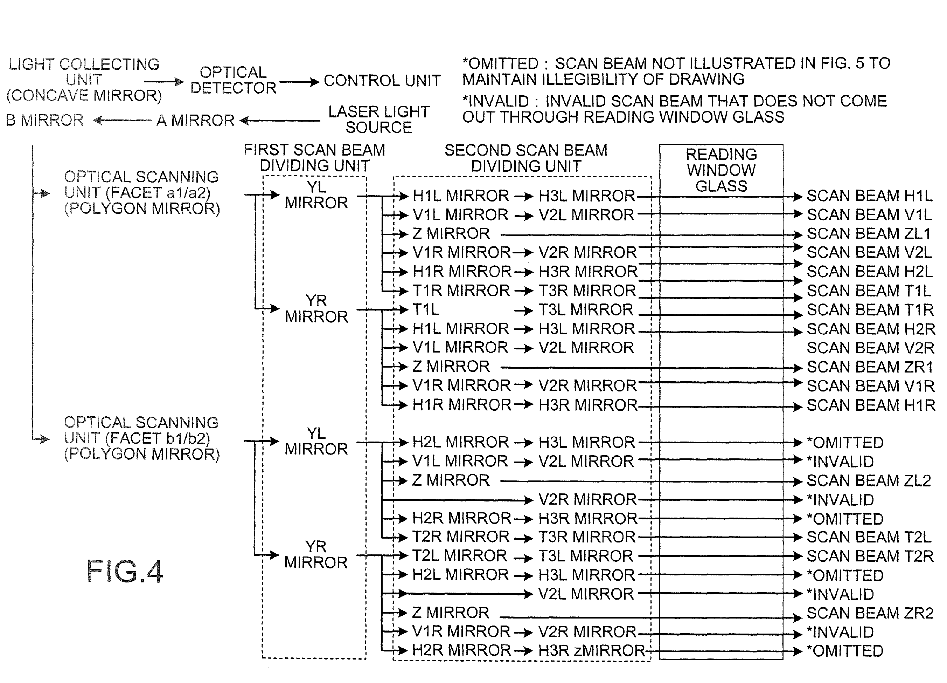

Fig. 4 is a diagram of the scan beams formed by the scanner unit 100. The laser beam emitted from the laser light source 10 is reflected by the A mirror and the B mirror shown in Fig. 3 and then are irradiated, as scan beams, onto the YL mirror and the YR mirror by the optical scanning unit 20. The scan beams reflected by the YL mirror and the YR mirror are then reflected by the second scan beam dividing unit 40 so that many scan beams are formed.

For example, one of the scan beams reflected by the YL mirror is reflected by the H1L mirror and the H3L mirror so as to form the scan beam H1L, whereas another one of the scan beams reflected by the YL mirror is reflected by the V1L mirror and the V2L mirror so as to form the scan beam V1L.

As another example, one of the scan beams reflected by the YR mirror is reflected by the T1L mirror and the T3L mirror so as to form the scan beam T1R, whereas another one of the scan beams reflected by the YR mirror is reflected by the H1L mirror and the H3L mirror so as to form the scan beam H2R.

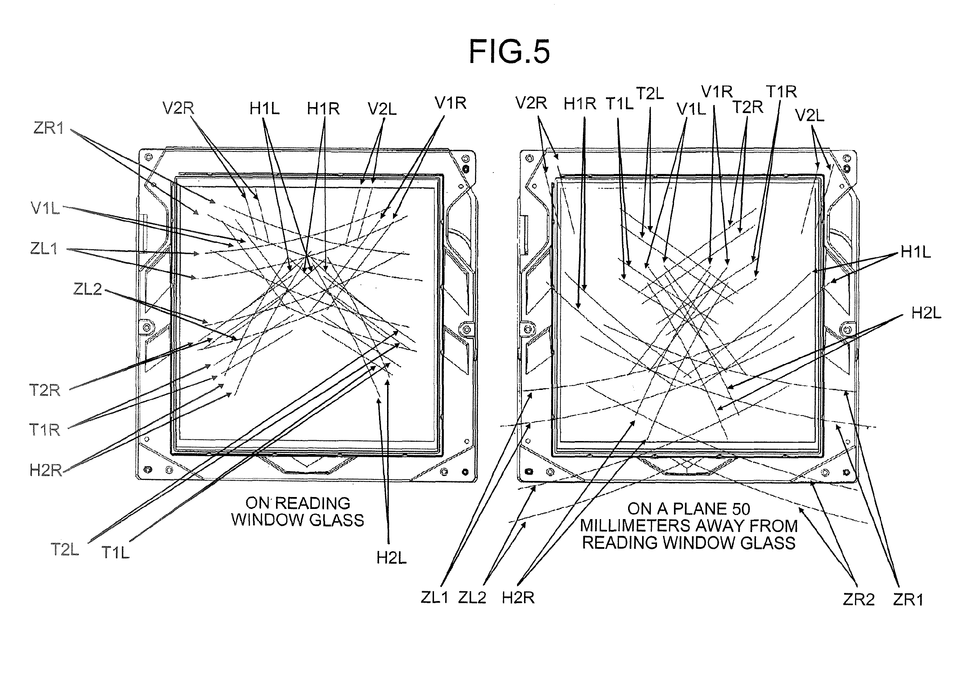

In Fig. 4, "OMITTED" denotes that the scan pattern of the scan beam is not shown in Fig. 5. "INVALID" denotes that the scan beam does not go out through the reading window glass.

Fig. 5 is a drawing of the scan patterns. In this drawing, the scan patterns on the reading window glass and the scan patterns on a plane that is positioned 50 millimeters away from the reading window glass are shown, respectively of the scan beams H1L, V1L, ZL1, V2L, H2L, T1L, T1R, H2R, V2R, ZR1, V1R, H1R, ZL2, T2L, T2R, and ZR2 that are formed in the paths shown in Fig. 4.

As explained above, the scanner unit 100 according to the present embodiment forms the scan patterns in multiple directions. It is therefore possible to read a barcode using a single reading window, no matter onto which one of five lateral faces of a commodity the barcode is attached.

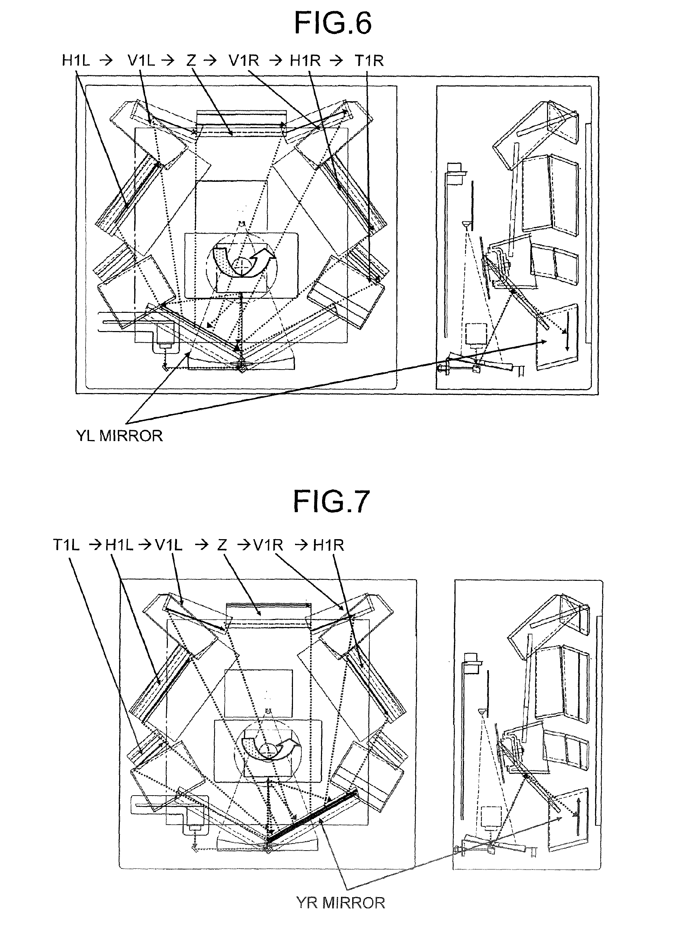

Fig. 6 is a drawing of the scan beams formed by the YL mirror reflection. As shown in this drawing, the scan beams reflected by the YL mirror are reflected by the H1L mirror, the V1L mirror, the Z mirror, the V1R mirror, the H1R mirror, and the T1R mirror, in the stated order, due to the rotation of the optical scanning unit 20 as shown in the drawing. The scan beams other than the scan beam reflected by the Z mirror are reflected by other mirrors so as to form scan beams.

Fig. 7 is a drawing of the scan beams formed by the YR mirror reflection. As shown in this drawing, the scan beams reflected by the YR mirror are reflected by the T1L mirror, the H1L mirror, the V1L mirror, the Z mirror, the V1R mirror, and the H1R mirror, in the stated order, due to the rotation of the optical scanning unit 20 as shown in the drawing. The scan beams other than the scan beam reflected by the Z mirror are reflected by other mirrors so as to form scan beams.

As explained so far, according to the embodiment, each of the scan beams formed by the optical scanning unit 20 is divided by the first scan beam dividing unit 30 and the second scan beam dividing unit 40. The first scan beam dividing unit 30 and the second scan beam dividing unit 40 are disposed in such a manner that the scan beams divided by the first scan beam dividing unit 30 traverse the rotation axis of the optical scanning unit 20 before reaching the second scan beam dividing unit 40. With this arrangement, it is possible to form the laser scan patterns in multiple directions with the single reading window and to read a barcode no matter onto which one of five lateral faces of a commodity the barcode is attached.

In the embodiment, an example in which the optical scanning unit 20 includes four mirrors is explained; however, the present invention is not limited to this example. It is acceptable to apply the present invention to other examples such as the ones in which the optical scanning unit 20 includes mirrors in other quantities, such as three mirrors.

In addition, in the present embodiment, the example in which seventeen mirrors are used as the second scan beam dividing unit 40 is explained; however, the present invention is not limited to this example. It is acceptable to apply the present invention to other examples such as the ones in which mirrors in other quantities are used.

According to one aspect of the present invention, the number of directions in which the scan beams are irradiated can be increased. Therefore, it becomes possible to read identification information with a single reading window no matter onto which one of five lateral faces of a rectangular solid object the identification information is attached.

Moreover, because a second beam scan dividing unit is irradiated with the scan beam reflected by the one of the mirrors, an effect is achieved where the second scan beam dividing unit is utilized without being wasted.

Furthermore, because two scan beams are irradiated on the one of the mirrors included in the second scan beam dividing unit, an effect is achieved where the plurality of mirrors are utilized without being wasted.

Moreover, because the space within the apparatus is efficiently utilized, an effect is achieved where it is possible to make the apparatus smaller in size.

Furthermore, because the number of directions of the scan beams is increased, an effect is achieved where it is possible to increase the number of planes from which identification information can be read.

Moreover, because unnecessary increases in the number of mirrors are prevented, an effect is achieved where it is possible to make the apparatus smaller in size.

Furthermore, because the relationship is made appropriate between the angles at which the scan beams are reflected and the number of scan beams, an effect is achieved where it is possible to improve the level of performance for reading identification information.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A reading apparatus that reads identification information attached on an object located outside of the reading apparatus by optically scanning a surface of the object, comprising:
a light source configured to output a light beam;
a rotating optical scanning unit configured to receive the light beam and deflect the light beam to obtain a deflected light beam;
a first scan beam dividing unit configured to receive the deflected light beam and form a first deflected scan beam from the deflected light beam;
a second scan beam dividing unit configured to receive the first deflected light beam and form a second deflected scan beam from the first deflected light beam;
an opening for letting out the second deflected scan beam so that the second deflected scan beam scans the object; and
a light collecting unit configured to collect light reflected from the object through the opening, wherein
the first scan beam dividing unit and the second scan beam dividing unit are disposed in such a manner that a part of the first deflected light beam traverses a rotation axis of the optical scanning unit before reaching the second scan beam dividing unit.

2. The reading apparatus according to claim 1, wherein
the first scan beam dividing unit includes two first mirrors that are disposed at mutually different angles, each first mirror forming a corresponding first deflected light beam, and
the first mirrors are disposed in such a manner that parts of the first deflected light beams formed by the first mirrors cross each other on a light path to the second scan beam dividing unit.

3. The reading apparatus according to claim 2, wherein
the second scan beam dividing unit includes a plurality of second mirrors that are disposed at mutually different angles, and
the second mirrors are disposed in such a manner that the first deflected light beams cross each other and are supplied onto at least one of the second mirrors.

4. The reading apparatus according to claim 1, wherein
the light collecting unit is disposed in a direction in which the first scan beam dividing unit is disposed.

5. The reading apparatus according to claim 4, wherein
the first scan beam dividing unit is disposed toward the opening than the light collecting unit.

6. The reading apparatus according to claim 4, wherein the light collecting unit includes a light detector that detects light, and
the optical detector is disposed in such a manner that the reflection beams collected by the light collecting unit traverse the rotation axis of the optical scanning unit on a light path to the optical detector.

7. The reading apparatus according to claim 1, wherein
scan beams formed by the second scan beam dividing unit includes scan beams formed by reflecting, using a plurality of mirrors, the scan beams obtained with the first scan beam dividing unit.

8. The reading apparatus according to claim 7, wherein
the scan beams formed by the second scan beam dividing unit are formed by reflecting, using any of one and two mirrors, the scan beams obtained with the first scan beam dividing unit.

9. The reading apparatus according to claim 1, wherein
the optical scanning unit includes four mirrors that correspond to four lateral faces of a rectangular solid.

10. A method of reading, with a reading apparatus, identification information attached on an object located outside of the reading apparatus by optically scanning a surface of the object, comprising:
first receiving including receiving a light beam output from a light source and deflecting the light beam with a rotating optical scanning unit to obtain a deflected light beam;
second receiving including receiving the deflected light beam and forming a first deflected scan beam from the deflected light beam;
third receiving including receiving the first deflected light beam and form a second deflected scan beam from the first deflected light beam;
outputting the second deflected scan beam out of the reading apparatus so that the second deflected scan beam scans the object; and
collecting light reflected from the object through the opening to read identification information attached on an object, wherein
a part of the first deflected light beam traverses a rotation axis of the optical scanning unit before reaching the second scan beam dividing unit.

11. The method according to claim 10, wherein
the second receiving including forming two first deflected scan beams by using two first mirrors that are disposed at mutually different angles, and
the first mirrors are disposed in such a manner that parts of the first deflected light beams formed by the first mirrors cross each other on a light path to the second scan beam dividing unit.

12. The method according to claim 11, wherein
the third receiving including forming the second deflected scan beam by using a plurality of second mirrors that are disposed at mutually different angles, and
the second mirrors are disposed in such a manner that the first deflected light beams cross each other and are supplied onto at least one of the second mirrors.

13. The method according to claim 10, wherein the collecting is performed by a light collecting unit, the second receiving is performed by a first scan beam dividing unit, wherein
the light collecting unit is disposed in a direction in which the first scan beam dividing unit is disposed.

14. The method according to claim 13, wherein
the first scan beam dividing unit is disposed toward the opening than the light collecting unit.

15. The method according to claim 13, wherein the light collecting unit includes a light detector that detects light, and
the optical detector is disposed in such a manner that the reflection beams collected by the light collecting unit traverse the rotation axis of the optical scanning unit on a light path to the optical detector.

16. The method according to claim 10, wherein
third receiving including forming the second deflected scan beam by reflecting, using a plurality of mirrors, the first deflected scan beam.

17. The method according to claim 16, wherein
third receiving including forming the second deflected scan beam by reflecting, using any of one and two mirrors, the first deflected scan beam.

18. The method according to claim 10, wherein
the optical scanning unit includes four mirrors that correspond to four lateral faces of a rectangular solid.
